# EUROPÄISCHE PATENTANMELDUNG

(11) **EP 3 252 895 A1**
(43) Veröffentlichungstag der Anmeldung: **06.12.2017**
(21) Anmeldenummer: 16173005.6
(22) Anmeldetag: 03.06.2016
(51) Int. Cl.: H02G 5/00, H02G 5/06

(54) **STROMSCHIENE UND STROMSCHIENENSYSTEM**

(71) Anmelder: Zurecon AG, 9053 Teufen AR (CH)
(72) Erfinder: PFLUGER, Gerd, 4625 Oberbuchsiten (CH)
(74) Vertreter: Rutz & Partner

(57) **Zusammenfassung**

Die Stromschiene (1A; 1B) umfasst in einem vergossenen oder gekapselten Stromschienenkörper (10A; 10B) vorgesehene und gegeneinander isolierte Leitungsstäbe (11), die an zwei Enden Anschlusskontakte (111) aufweisen, die aus dem Stromschienenkörper (10A; 10B) hervortreten und die durch elektromechanische Verbindungsmittel (5, 55) mit Anschlusskontakten (111) einer benachbarten Stromschiene (1B; 1A) verbindbar sind. Erfindungsgemäss sind mit dem Stromschienenkörper (10A; 10B) verbundene oder verbindbare mechanische Verbindungsmittel (6, 16, 61, 62, 63, 64, 105, 106) vorgesehen, durch die der Stromschienenkörper (10A; 10B) an wenigstens einem Ende nur mechanisch mit dem Stromschienenkörper (10B; 10A) einer benachbarten Stromschiene (1B; 1A) verbindbar ist, sodass die Stromschiene (1A; 1B) nach der Installation einerseits durch eine mechanische Verbindung und andererseits durch eine elektrische Verbindung, die getrennt voneinander und unabhängig voneinander erstellt werden, mit der benachbarten Stromschiene (1B; 1A) verbunden ist.

## Beschreibung

Die Erfindung betrifft eine Stromschiene und ein Stromschienensystem.

Für die Übertragung von Strom mit hoher Leistung, hoher Sicherheit und Zuverlässigkeit werden Stromschienen als Übertragungsleitungen zwischen Transformatoren, Haupt- und Unterverteilern in Fabrikhallen, Gewerbe- und Verwaltungsgebäuden oder auch als Steigleitungen in Hochbauten eingesetzt. Stromschienen und dafür vorgesehene Installationsvorrichtungen sind z.B. aus [1], Produktkatalog "Niederspannungs-Schienenverteiler LANZ HE 2.5.2" der LANZ OENSINGEN AG vom Januar 2013 bekannt. Weitere Montagevorrichtungen sind aus [2], Produktkatalog "MULTIFIX" der LANZ OENSINGEN AG vom August 2001 bekannt.

Zur Verbindung von Stromschienen werden Kopplungsvorrichtungen verwendet, wie sie z.B. in [1], Seite 8 beschrieben sind. Kopplungsvorrichtungen dieser Art, die auch als Kontaktblock bezeichnet werden, umfassen Isolationsplatten, die zwischen paarweise miteinander verbundenen Anschlusskontakten eingesetzt werden, und zwei Klemmplatten, die mittels einer Verbindungsschraube gegen die Anschlusskontakte gezogen werden, um diese gegenseitig zu verklemmen. Durch diese Verbindung der Anschlüsse der Leitungsstäbe erfolgt nicht nur eine elektrische Verbindung, sondern auch eine mechanische Verbindung zwischen den Stromschienen. Die mechanische Verbindung erfolgt dabei stets zuverlässig, weshalb aus der Sicht des Installateurs die Verbindung stets zufriedenstellend ist. Tatsächlich treten jedoch regelmässig Mängel bei den elektrischen Verbindungen auf, die bei der Installation nicht erkannt werden und die beim Betrieb des installierten Stromschienensystems zu Störungen führen können. Die Anschlusskontakte sind unter Umständen nicht präzise ausgerichtet, wurden gegebenenfalls nicht genügend gereinigt oder werden durch die Kopplungsvorrichtung nicht flächendeckend aneinandergepresst. Durch zahlreiche verschiedene Einflussfaktoren können daher Mängel bei der elektrischen Verbindung auftreten, die zu einem späteren Zeitpunkt permanente oder intermittierende Störungen verursachen können, die gegebenenfalls von der Temperatur der Stromschiene abhängig ist, die ihrerseits in Abhängigkeit des geführten Stroms variiert.

Die Installation von Leitungen, Einrichtungen und Geräten am und im Baukörper wird traditionellerweise Monteuren auf der Baustelle überlassen, die nicht auf die Installation von Stromschienen spezialisiert sind und die fallweise die benötigten Befestigungs- und Montagemittel beschaffen. Zum Anheben von schweren Stromschienen mit einem Gewicht von über 50 kg werden Hebevorrichtungen verwendet.

[3], EP1589627B1, offenbart eine Befestigungsvorrichtung und eine Hebevorrichtung, die der Installation von Stromschienen im Bereich der Decke eines Gebäudes dienen. Die Befestigungsvorrichtung umfasst mit der Decke verbindbare, vertikal ausgerichtete Gewindestangen und ein zum Tragen wenigstens einer Stromschiene dienendes Tragelement. Das Tragelement ist derart an der Unterseite der Gewindestangen montierbar und demontierbar, dass die zu installierende Stromschiene, vor der Montage des Tragelements, senkrecht von unten zwischen die Gewindestangen einführbar, das Tragelement nach dem Einführen der Stromschiene mit der Gewindestangen verbindbar und die eingeführte Stromschiene anschliessend auf das Tragelement absenkbar ist.

Aus [4], EP1905723B1, ist eine weitere Hebevorrichtung bekannt, die ein von einer Antriebsvorrichtung anziehbares Zugelement aufweist, mittels dessen wenigstens eine damit gehaltene Stromschiene zu einer Befestigungsvorrichtung hochgezogen werden kann. Die Hebevorrichtung umfasst ein Kopfstück, das mittels Verbindungselementen mit der Befestigungsvorrichtung verbindbar ist und das wenigstens eine Umlenkrolle aufweist, über die das Zugelement umlenkbar ist, sowie eine Hilfsvorrichtung, die mit der Antriebsvorrichtung und dem Kopfstück lösbar verbunden ist, mittels der die beim Anheben der Stromschiene über das Zugelement auf die Antriebsvorrichtung einwirkende Kraft kompensierbar ist.

Gemäss [3] werden die Stromschienen nach der Installation, z.B. mittels Schrauben, bezüglich der Höhe und der Neigung justiert, um eine präzise gegenseitige Ausrichtung von miteinander zu verbindenden Stromschienen zu erzielen. Gemäss [3] ist zu berücksichtigen, dass Stromschienen kurze, relativ dicke (z.B. 10 mm) und hohe (bis zu 25 cm) Anschlusslaschen aufweisen, die mit engen Toleranzen gefertigt sind, wobei zwischen den Anschlusslaschen wenig Spielraum vorhanden ist. Die gegenseitige Kopplung von Stromschienen erfordert daher Präzisionsarbeit. Insbesondere die Montage der Kupplung zur Verbindung der Anschlusslaschen erfordert vorgängig ein präzises gegenseitiges Ausrichten der einzelnen Stromschienenbauteile.

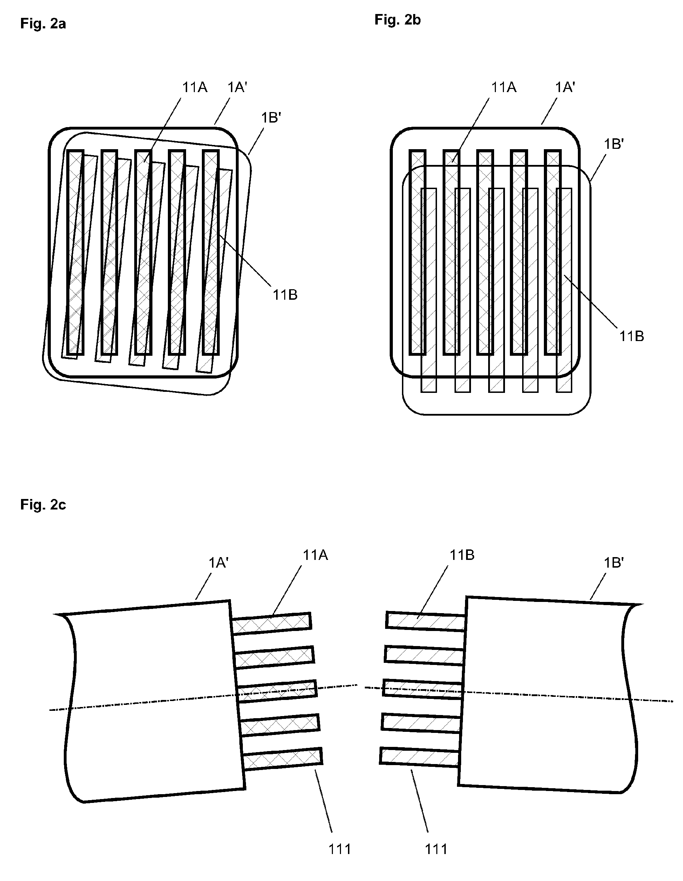

Nach dem Hochziehen der Stromschienen treten jedoch regelmässig die in den Figuren 2a, 2b und 2c dargestellten Fehlausrichtungen der Stromschienen auf.

Die beiden in Fig. 2a schematisch dargestellten Stromschienen 3, 3' sind gegeneinander verkantet bzw. verdreht. Die beiden in Fig. 2b gezeigten Stromschienen 3, 3' sind nicht in einer Ebene ausgerichtet; d.h. deren Achsen sind parallel ausgerichtet, jedoch vertikal und horizontal gegeneinander verschoben. Die beiden in Fig. 2c gezeigten Stromschienen 3, 3' sind nicht achsparallel zueinander ausgerichtet. Typischerweise treten diese Fehlausrichtungen in Kombination auf. Z.B. sind die zu verbindenden Stromschienen gegeneinander verdreht und nicht achsparallel ausgerichtet.

Das Ausrichten der Stromschienen z.B. mittels Wasserwagen ist dabei mit Schwierigkeiten verbunden. Bei der Justierung der Befestigungsvorrichtung hinsichtlich eines Parameters können daher wieder andere Parameter beeinträchtigt werden. Sofern nur ein Monteur anwesend ist, so muss er sich jeweils zwischen den verschiedenen Befestigungsvorrichtungen bewegen, um die Justierungen iterativ vorzunehmen. Insgesamt resultieren erhebliche Aufwendungen bei der Installation der Stromschienen.

Einerseits resultiert ein hoher Aufwand zur präzisen Ausrichtung der angehobenen Stromschienen. Der Installateur muss gegebenenfalls auf einer Leiter stehend die schweren Stromschienen ausrichten. Dies ist mit Schwierigkeiten verbunden, da die Stromschienen nahe der Decke von Hebevorrichtungen gehalten sind, die einer Justierung entgegenwirken. Oft muss die Hebevorrichtung bewegt werden, um eine notwendige Justierung überhaupt ausführen zu können. Gleichzeitig muss der Installateur die mehrteilige elektrische Kopplungsvorrichtung handhaben, um die elektrische und mechanische Verbindung zu erstellen. Während der Erstellung elektrischen Verbindung können daher stets starke mechanische Kräfte auf die Verbindungskontakte einwirken, weshalb die Montagearbeit behindert wird und Verkantungen verbleiben können.

Durch verbleibende Verkantungen, wie sie in den Figuren 2a, 2b und 2c gezeigt sind, können andererseits mangelhafte elektrische Verbindungen resultieren, die Störungen oder Ausfälle verursachen können. Besonders kritisch sind dabei nicht Totalausfälle, sondern Mängel, die kaum lokalisierbar sind. Durch eine unpräzise Ausrichtung der Stromschienen können z.B. anstelle von flächigen Verbindungen, Verbindungen über punktuelle oder linienförmige Kontaktbereiche erfolgen, deren Temperatur vom aktuellen Stromfluss abhängig ist. Daraus resultierende Temperaturdehnungen können sporadisch zu Störungen führen.

Der vorliegenden Erfindung liegt daher die Aufgabe zugrunde, eine verbesserte Stromschiene und ein verbessertes Stromschienensystem mit solchen Stromschienen zu schaffen.

Erfindungsgemässe Stromschienen sollen mit geringem Aufwand präzise installiert werden können. Insbesondere soll der Aufwand zur präzisen Ausrichtung benachbarter Stromschienen reduziert werden.

Die elektrische Verbindung von Stromschienen soll vollzogen werden können, ohne dass störende Kräfte auf die elektrischen Kontakte einwirken. Die elektrischen Kontakte sollen einfach geprüft und gereinigt werden können. Die elektrische Verbindung zwischen den Stromschienen soll mit einfachen Massnahmen in optimaler Qualität erstellt werden können. Dabei sollen flächige Kompaktverbindungen resultieren, die unabhängig von auftretenden Temperaturdehnungen eine optimale Verbindungsqualität garantieren.

Diese Aufgabe wird mit einer Stromschiene und einem Stromschienensystem gelöst, welche die in Anspruch 1 bzw. 14 angegebenen Merkmale aufweist. Vorteilhafte Ausgestaltungen der Erfindung sind in weiteren Ansprüchen angegeben.

Die Stromschiene umfasst in einem vergossenen oder gekapselten Stromschienenkörper vorgesehene und gegeneinander isolierte Leitungsstäbe, die an zwei Enden Anschlusskontakte aufweisen, die aus dem Stromschienenkörper hervortreten und die durch elektromechanische Verbindungsmittel mit Anschlusskontakten einer benachbarten Stromschiene verbindbar sind. Die Leitungsstäbe sind z.B. aus Kupfer oder Aluminium gefertigt. Mittels der elektromechanischen Verbindungsmittel, wie Metallschrauben, Unterlagsscheiben und Schraubenmuttern wird der elektrische Kontakt zwischen den Anschlüssen von zwei erfindungsgemässen Stromschienen erstellt. Durch mehrere elektrisch miteinander verbundene erfindungsgemässe Stromschienen wird ein erfindungsgemässes Stromschienensystem gebildet.

Erfindungsgemäss sind mit dem Stromschienenkörper verbundene oder verbindbare mechanische Verbindungsmittel vorgesehen, durch die der Stromschienenkörper der Stromschiene an wenigstens einem Ende nur mechanisch mit dem Stromschienenkörper einer benachbarten Stromschiene verbindbar ist, sodass die Stromschiene nach der Installation einerseits durch eine mechanische Verbindung und andererseits durch eine elektrische Verbindung, die getrennt voneinander und unabhängig voneinander erstellt werden, mit der benachbarten Stromschiene verbunden ist.

Der Erfindung liegt somit der Gedanke zugrunde, dass vor der elektrischen Verbindung der Stromschienen die präzise gegenseitige Ausrichtung der Stromschienen von zentraler Bedeutung ist. Erfindungsgemäss werden zwei erfindungsgemässe Stromschienen daher zuerst mechanisch miteinander verbunden, bevor die elektrische Verbindung erstellt wird. Da die elektrisch zu verbindenden Stromschienen präzise ausgerichtet und durch die mechanische Verbindung mechanisch stabil gehalten sind, kann auch die elektrische Verbindung rasch und in hoher Qualität erstellt werden. Die Anschlusskontakte liegen frei und können geprüft und gereinigt werden. Ein Verkanten der Anschlusskontakte wird vermieden, weshalb die Kontakte flächig aneinander anliegen und eine optimale Verbindungsqualität gewährleisten. Punktuelle Verbindungen, an denen Übergangswiderstände und Erwerbungen auftreten könnten, werden vermieden. Das erfindungsgemässe Stromschienensystem arbeitet daher ohne Verluste und ohne Störungen, die durch mangelhafte Verbindungen entstehen könnten.

Besonders vorteilhaft ist, dass während des Vorgangs zur elektrischen Verbindung der Stromschienen die Anschlusskontakte stabil ausgerichtet sind und keine störenden Kräfte einwirken. Der Installateur kann sich daher allein auf die Arbeit zur Erstellung der elektrischen Kontakte konzentrieren.

Besonders vorteilhaft ist ferner, dass die Ausrichtung der Stromschienen im ersten Installationsschritt mit minimalem Aufwand erfolgen kann, da dies vorzugsweise durch die Ausgestaltung der Stromschienen und die Verbindungsmittel unterstützt wird. Die Stromschienen können daher in Position gebracht, ausgerichtet und mit einfachen Massnahmen stabil miteinander verbunden werden.

Die mechanische Verbindung zwischen dem Stromschienenkörper einer ersten Stromschiene und dem Stromschienenkörper einer zweiten Stromschiene kann dabei permanent oder nur temporär für eine Zeitdauer erstellt werden, während der die elektrische Verbindung zur benachbarten Stromschiene erstellt wird. Durch die Montage der elektromechanischen Verbindungsmittel erfolgt erfindungsgemäss nicht nur eine elektrisch hochwertige Verbindung, sondern auch eine mechanisch stabile Verbindung der Anschlusskontakte zwischen den beiden Stromschienen, weshalb nach Erstellen einer hochwertigen elektrischen Verbindung die mechanische Verbindung aufgehoben werden kann. Bevorzugt wird die separate mechanische Verbindung jedoch aufrechterhalten, sodass die elektrische Verbindung stets entlastet ist und keine störenden Kräfte einwirken.

Die erfindungsgemässe Lösung kann unabhängig von der Ausgestaltung der Leitungsstäbe und Anschlusskontakte realisiert werden, die z.B. parallel zur Längsachse der Stromschiene ausgerichtet sind und frontseitig oder rückseitig aus dem Stromschienenkörper hervortreten und/oder die senkrecht oder schräg zur Längsachse der Stromschiene ausgerichtet sind und seitlich aus dem Stromschienenkörper hervortreten. Ferner können vorteilhaft Stromschienen verwendet werden, bei denen erste Anschlusskontakte an einem Ende der Stromschiene parallel zur Längsachse der Stromschiene ausgerichtet sind und frontseitig oder rückseitig aus dem Stromschienenkörper hervortreten und zweite Anschlusskontakte am anderen Ende der Stromschiene senkrecht oder schräg zur Längsachse der Stromschiene ausgerichtet sind und seitlich aus dem Stromschienenkörper hervortreten. Das erfindungsgemässe Stromschienensystem kann aus identischen oder paarweise zueinander komplementären Stromschienen aufgebaut werden. Die Symmetrie bzw. Asymmetrie kann bezüglich der Position der Anschlusskontakte und/oder in Bezug auf die Ausgestaltung des Stromschienenkörpers, und/oder in Bezug auf die Position der mechanischen Verbindungselemente vorliegen. Die Stromschienen können I-förmig mit ersten und zweiten Anschlusskontakten entlang der Längsachse ausgerichtet, L- förmig mit ersten Anschlusskontakten entlang der Längsachse ausgerichtet und zweiten Anschlusskontakten senkrecht zur Längsachse ausgerichtet oder U- förmig mit ersten und zweiten Anschlusskontakten senkrecht zur Längsachse ausgerichtet ausgestaltet sein. Der Stromschienenkörper kann die Anschlusskontakte an einem oder an beiden Enden überragen, sodass einseitig oder beidseitig der Anschlusskontakte ein Kopplungsbereich für die mechanischen Verbindungsmittel geschaffen wird. Die Kopplungsbereiche werden vorzugsweise mit den genannten Formelementen oder Ausformungen versehen. Alternativ können mechanische Verbindungselemente, z.B. gelochte Ankerplatten in die Stromschienenkörper eingegossen werden.

Die erfindungsgemässe Lösung kann mit blechgekapselten oder besonders vorteilhaft mit Stromschienen angewendet werden, die einen aus einem Isolationsmaterial, wie Giessharz oder Polymerbeton, geformten Isolationskörper aufweisen.

Vorzugsweise weist der Stromschienenkörper wenigstens ein Formteil auf, durch das eine formschlüssige Verbindung mit dem parallel oder koaxial dazu ausgerichteten Stromschienenkörper der benachbarten Stromschiene erstellbar ist, der vorzugsweise ein dazu komplementäres Formteil aufweist. Verbindungsmittel, wie Flanschelemente, Bohrungen, Nocken oder Rippen können in diesem Fall besonders einfach und vorteilhaft in den Isolationskörper eingegossen werden. Das Formteil bildet wenigstens eine Einformung oder wenigstens eine Ausformung, wie eine Bohrung, ein Nocken oder eine Rippe, mittels der der Stromschienenkörper gegenüber dem Stromschienenkörper der benachbarten Stromschiene in einer Richtung oder in einer Ebene fixierbar ist.

Vorzugsweise umfasst der Stromschienenkörper wenigstens eine Anformung, wie eine Flanschplatte, die dem Halten wenigstens eines der mechanischen Verbindungsmittel dient und/oder die mit wenigstens einer dazu korrespondierenden Anformung, die am Stromschienenkörper der benachbarten Stromschiene vorgesehen ist, verbindbar oder formschlüssig koppelbar ist. Diese Anforderungen können die Anschlusskontakte überragen und ineinander eingreifen.

Die Stromschienenkörper können besonders vorteilhaft mit einer oder mehreren Längsrippen versehen werden, die derart ineinander eingreifen, dass die Stromschienenkörper nur noch parallel zueinander verschiebbar und mittels Verbindungselementen, z.B. einer Schraubengarnitur, an einer geeigneten Position gegenseitig fixierbar sind. Vorteilhaft können die Stromschienenkörper auch mit zueinander komplementären Formteilen, wie Nocken, Zapfen und Öffnungen, versehen sein, die ineinander eingefügt werden können, um die Stromschienenkörper in einer Ebene zu fixieren. Vorzugsweise werden die Stromschienenkörper mit Formteilen versehen, die ineinander einrasten können. Bei einem gegossenen Stromschienenkörper können diese Formteile in einfacher Weise in einer entsprechenden Gussform realisiert werden.

Alternativ oder zusätzlich werden mechanische Verbindungsmittel vorgesehen, die z.B. ein Band, wenigstens einen festen oder elastischen Montagebügel oder Montagering, oder wenigstens eine Schraubverbindung, oder wenigstens ein verschiebbar gelagertes Verbindungsteil umfassen. Unterschiedliche Verbindungsteile können auch in Kombination miteinander verwendet werden.

In einer vorzugsweisen Ausgestaltung sind die Stromschienenkörper der ersten und zweiten Stromschiene mittels des vorzugsweise mit einer Haftschicht versehenen Bands oder dem vorzugsweise spannbaren Ring fest umschliessbar. Die z.B. mit Formteilen formschlüssig gekoppelten Stromschienenkörper können auf diese Weise vorteilhaft gegenseitig fixiert werden.

Vorteilhaft kann der Stromschienenkörper auch eine Bohrung, z.B. eine Gewindebohrung oder eine Bohrung mit einem Gewindeeinsatz, aufweisen, in die eine Verbindungsschraube der Schraubverbindung einführbar ist, die von der benachbarten Stromschiene gehalten ist.

In einer weiteren bevorzugten Ausgestaltung umfasst der Stromschienenkörper wenigstens einen Lagerkanal, in dem ein Verbindungsteil verschiebbar gelagert und in eine Öffnung, vorzugsweise in einen Lagerkanal der benachbarten Stromschiene verschiebbar ist. Bei dieser Ausgestaltung können zwei Stromschienen gegeneinander ausgerichtet und mit einem Handgriff gegeneinander fixiert werden. Vorzugsweise weist der Stromschienenkörper wenigstens zwei Lagerkanäle auf, in denen je ein Verbindungsteil verschiebbar gelagert ist.

Das Verbindungsteil umfasst vorzugsweise einen im Lagerkanal axial verschiebbar gehaltenen Bolzen und ein mit dem Bolzen verbundenes Hebelelement, welches durch einen Öffnungsschlitz im Lagerkanal nach aussen ragt und z.B. manuell betätigt werden kann. Der Lagerkanal und der Bolzen weisen vorzugsweise zueinander korrespondierende Querschnitte auf, die z.B. kreisförmig oder rechteckförmig ausgebildet sind. Diese Ausgestaltung ist insbesondere bei einem gegossenen Stromschienenkörper mit minimalem Aufwand realisierbar. Z.B. wird eine Hülse mit Omega-förmigem Querschnitt in den Stromschienenkörper integriert, die den mit dem Öffnungsschlitz versehenen Lagerkanal bildet. Dadurch kann mit minimalem Arbeitsaufwand und praktisch vernachlässigbaren Materialkosten ein einfacher und äusserst stabiler Verschluss gebildet werden, mittels dessen die gegenseitig ausgerichteten Stromschienen mit einem Handgriff fixiert werden können. Der Installationsvorgang umfasst somit zwei voneinander getrennte Arbeitsprozesse einerseits zur mechanischen und andererseits zur elektrischen Verbindung der Stromschienen, die bequem und ungestört ausgeführt werden können.

Nachfolgend wird die Erfindung anhand von Zeichnungen näher erläutert. Dabei zeigt:
- Fig. 1: eine Befestigungsvorrichtung 9, mittels der zwei Stromschienen 1 installiert werden;
- Fig. 2a: zwei achsparallel zueinander ausgerichtete Stromschienen 1A', 1B', die um die Längsachse gegeneinander verdreht sind;
- Fig. 2b: zwei achsparallel zueinander ausgerichtete Stromschienen 1A', 1B', die vertikal gegeneinander verschoben sind; und
- Fig. 2c: die Endstücke von zwei Stromschienen 1A', 1B', die nicht achsparallel zueinander ausgerichtet sind;
- Fig. 3a: zwei voneinander getrennte erfindungsgemässe Stromschienen 1A, 1B mit einander zugewandten Endstücken, die mit zueinander komplementären Formteilen 105A, 105B versehen sind;
- Fig. 3b: die zwei Stromschienen 1A, 1B von Fig. 3a, die einerseits mechanisch durch mechanische Verbindungsmittel 6, 61 und andererseits elektrisch durch elektromechanische Verbindungsmittel 5, 55 miteinander verbunden wurden;
- Fig. 4a: zwei getrennt voneinander mechanisch und elektrisch miteinander verbundene erfindungsgemässe Stromschienen 1A, 1B in einer weiteren vorzugsweisen Ausgestaltung;
- Fig. 4b: die zwei Stromschienen 1A, 1B von Fig. 4a aus einem anderen Blickwinkel;
- Fig. 5a: zwei gegeneinander verschobene erfindungsgemässe Stromschienen 1A, 1B in einer weiteren vorzugsweisen Ausgestaltung; und
- Fig. 5b: die zwei Stromschienen 1A, 1B von Fig. 5a während des Vorgangs der mechanischen Verbindung.

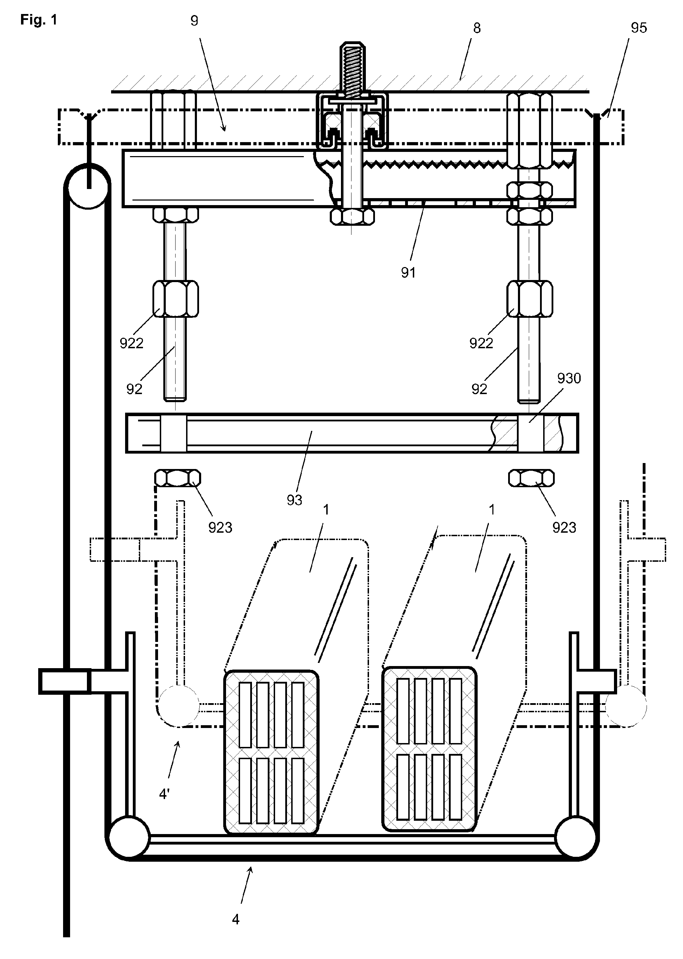

Fig. 1 zeigt eine zur Installation von Stromschienen 1 dienende Befestigungsvorrichtung 9, die ein an der Decke 8 eines Gebäudes montiertes Joch 91 und zwei Gewindestangen 92, zwischen die die Stromschienen 1 mittels Seilzugvorrichtungen 4, 4' hochgefahren werden können. Die Stromschienen 1 sind auf der Frontseite von einer ersten Seilzugvorrichtung 4 und auf der Rückseite von einer zweiten Seilzugvorrichtung 4' gehalten. Die beiden Gewindestangen 12 sind nach dem Einführen der Stromschienen 1 mittels ersten Schraubenmuttern 922 und zweiten Schraubenmuttern 923 mit einem eingesetzten Tragelement 93 verbindbar, auf das die Stromschienen 1 abgestützt werden. Schwere Stromschienen 1 können daher in einfacher Weise angehoben und auf das anschliessend eingesetzte Tragelement 93 abgesetzt werden.

Wie eingangs beschrieben wurde, treten nach dem Hochziehen der Stromschienen regelmässig die in den Figuren 2a, 2b und 2c dargestellten Fehlausrichtungen der Stromschienen 1 auf.

Fig. 2a zeigt zwei achsparallel ausgerichtete Stromschienen 1A', 1B', die gegeneinander verdreht sind. Fig. 2b zeigt zwei achsparallel ausgerichtete Stromschienen 1A', 1B' die vertikal gegeneinander verschoben sind. Fig. 2c zeigt die Endstücke von zwei Stromschienen 1A', 1B', die nicht achsparallel zueinander ausgerichtet sind. Diese kaum vermeidbaren Fehlausrichtungen haben zur Folge, dass bei der Verbindung der Anschlusskontakte 111 der Leitungsstäbe 11A, 11B keine optimale Verbindungsqualität resultiert.

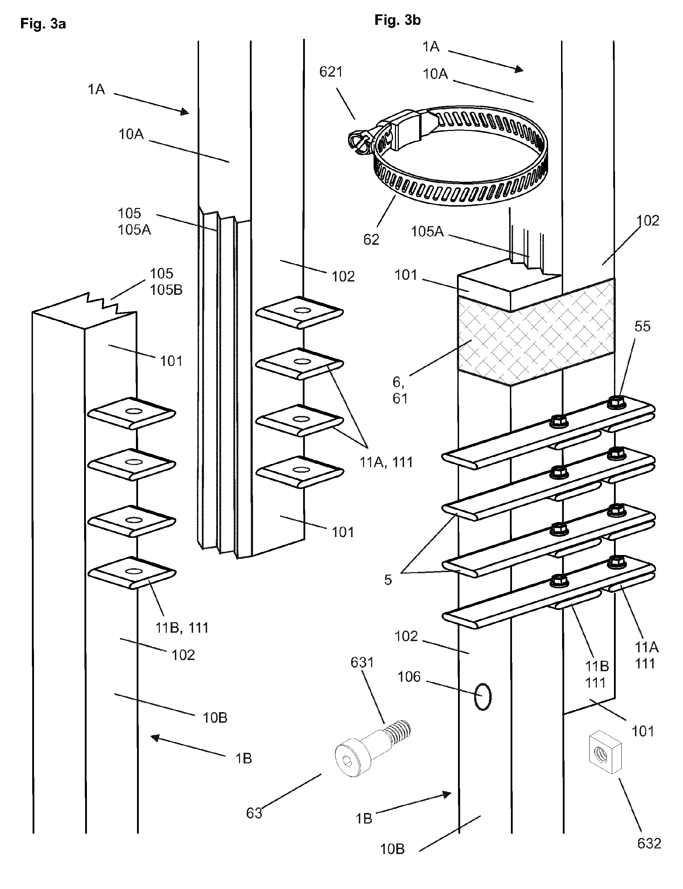

Fig. 3a zeigt zwei voneinander getrennte erfindungsgemässe Stromschienen 1A, 1B, die einen aus einem Isolationsmaterial, wie Giessharz oder Polymerbeton, geformten Stromschienenkörper 10A; 10B aufweisen. Das Gewicht der Stromschienen 1A, 1B liegt je nach Stromschienentyp im Bereich von rund 7kg/m bis 90kg/m. Das Volumen der Stromschienen 1A, 1B liegt typischerweise im Bereich von 0.003 m3/m bis 0.03 m3/m. Die Stromschienen 1A, 1B werden im Niederspannungsbereich z.B. bei 1000 V oder im Mittelspannungsbereich z.B. zwischen 3kV und 10kV eingesetzt.

In den Stromschienenkörpern 10A, 10B der Stromschienen 1A, 1B sind mehrere Leitungsstäbe 11A bzw. 11B angeordnet, die seitlich aus den Stromschienenkörpern 10A, 10B hervortreten und Anschlusskontakte 111 bilden. Vorzugsweise werden Leitungsstäbe aus Aluminium oder Kupfer verwendet. Die Anschlusskontakte 111 der ersten Stromschiene 1A sind durch elektromechanische Verbindungsmittel 5, 55 mit Anschlusskontakten 111 der zweiten Stromschiene 1B verbindbar. Dazu sind die Anschlusskontakte 111 mit Öffnungen versehen, durch die Anschlussschrauben 55 geführt werden können, mittels denen Anschlussplatten 5 festgeschraubt werden können.

Damit die elektrischen Verbindungen problemlos erstellt werden können, werden die Stromschienenkörper 10A, 10B der beiden Stromschienen 1A, 1B zuvor präzise gegeneinander verschoben und ausgerichtet und anschliessend mechanisch miteinander verbunden, so dass sie praktisch eine Einheit bilden. Dieser Vorgang ist besonders einfach, da die Stromschienenkörper gegeneinander verschoben und mechanisch unmittelbar miteinander verbunden werden. Es erfolgt nicht eine mechanische Verbindung über die Anschlusskontakte sondern eine direkte mechanische Verbindung, die auf unterschiedliche Weise vorteilhaft realisiert werden kann. Auf die Verwendung von Wasserwaagen kann daher verzichtet werden.

Zur mechanischen Verbindung der Stromschienenkörper 10A, 10B sind verschiedene mechanische Verbindungsmittel 6, 16, 61, 62, 63, 64, 105, 106 einsetzbar, von denen einige nachstehend beschrieben werden.

Besonders einfach und präzise kann die Verbindung zwischen den Stromschienenkörpern 10A, 10B der beiden Stromschienen 1A, 1B erfolgen, wenn diese mit zueinander korrespondierenden Formteilen 105A, 105B versehen sind. Fig. 3a zeigt, dass die Stromschienenkörper 10A, 10B an den einander zugewandten Seiten mit Rippen, Rillen oder Furchen versehen sind, die sich parallel zur Längsachse der Stromschienenkörper 10A, 10B erstrecken. Die Formteile sind komplementär zueinander ausgebildet, sodass die Stromschienenkörper 10A, 10B präzise gegeneinander ausgerichtet, formschlüssig und spielfrei miteinander verbunden und gegebenenfalls nur noch axial gegeneinander verschoben werden können. In der Folge können die Stromschienenkörper 10A, 10B durch einfache Verbindungsmittel 6 gegenseitig fixiert werden, die in wenigstens einem Kopplungsbereich 101, 102 montiert werden, der in Längsrichtung der Stromschiene 1A; 1B vor und/oder nach den Anschlusskontakten 111 liegt. Verbindungsplatten 5 können anschliessend auf die Anschlusskontakte 111 aufgelegt und durch Schrauben 55 und Schraubenmuttern verschraubt werden. Die elektrische Verbindung kann daher mit geringem Aufwand bequem und präzise durchgeführt werden.

Fig. 3b zeigt die zwei Stromschienen 1A, 1B von Fig. 3a, die einerseits mechanisch durch mechanische Verbindungsmittel 6, 61 und andererseits elektrisch durch elektromechanische Verbindungsmittel 5, 55 miteinander verbunden wurden. Exemplarisch ist gezeigt, dass die zueinander korrespondierenden Kopplungsbereiche 101, 102 der Stromschienenkörper 10A, 10B mit einfachen Mitteln miteinander verbindbar sind. Oben ist gezeigt, dass die Kopplungsbereiche 101, 102 durch ein Band 61, z.B. eine Klebeband, oder durch ein Spannelement, wie einen Spannring 62 miteinander verbindbar sind. Der Spannring 62 kann mittels einer Schraube 621 gespannt werden. Auf der Unterseite sind die zueinander korrespondierenden Kopplungsbereiche 101, 102 durch eine Schraubengarnitur 63 miteinander verbunden, die z.B. eine Montageschraube 631 und eine Schraubenmutter 632 umfasst, die z.B. in einer Bohrung im Stromschienenkörper 10A verankert ist. Die Montageschraube 631 ist durch eine Bohrung 106 im Stromschienenkörper 10A durch diesen hindurchführbar und in die Schraubenmutter 632 im benachbarten Stromschienenkörper 10B eindrehbar.

Schrauben 631 und Schraubenmuttern 632 sowie entsprechende Bohrungen 106 können raumsparend in den Stromschienenkörpern 10A, 10B vorgesehen werden. Die Schraubenmutter kann vorteilhaft in die Stromschienenkörper 10A, 10B eingegossen sein.

Die Stromschienen 1A, 1B sind in dieser Ausgestaltung der Erfindung identisch ausgebildet. Durch die Verbindung in zwei Kopplungsbereichen 101, 102 beidseits der Anschlusskontakte 111 wird eine besonders stabile Verbindung erstellt. Es ist jedoch auch möglich, bei einer der Stromschienen 1A; 1B auf den frontseitigen Kopplungsbereich 101 zu verzichten.

Fig. 3b zeigt, dass Verbindungsmittel 6, 61, 62, 63 verwendet werden können, die wenig Raum in Anspruch nehmen und keine oder nur geringe Änderungen der Abmessungen der Stromschienenkörper 10A, 10B erfordern. Durch leichte Modifikationen der Stromschienenkörper 10A, 10B können jedoch auch Hilfselemente vorgesehen werden, die es erlauben, die mechanischen Verbindungselemente, insbesondere die Schraubengarnituren 63 zu montieren. An den Stromschienenkörpern 10A; 10B können Formteile 105 nicht nur eingeformt werden. Es ist auch möglich Ausformungen einstückig vorzusehen. Durch eine kleine Anpassung der Gussform können diese weiteren Formteile praktisch ohne zusätzlichen Aufwand vorgesehen werden. Besonders einfach können auch Verbindungsanker, wie z.B. Ankerplatten, in der Gussmasse verankert werden, die es erlauben, die gewünschten mechanischen Verbindungen herzustellen. Die metallenen Ankerplatten sind in der Folge im Stromschienenkörper verankert und dienen als Flanschplatte zur Aufnahme der Verbindungsschrauben.

Auch bei gekapselten Stromschienen können solche Hilfselemente, wie Metallflansche, in einfacher Weise vorgesehen werden. Diese können ebenfalls einstückig an der Metallkapselung vorgesehen oder mit dieser verbunden werden.

In Fig. 3a und Fig. 3b wird keine konventionelle Kopplungsvorrichtung (Kontaktblock) verwendet, bei der eine Klemmverbindung resultiert. Die Anschlusskontakte 111 der miteinander verbundenen Stromschienen 1A, 1B liegen frei und können vor der Montage der elektrischen Verbindungsmittel 5, 55 bequem gereinigt werden, sodass hochwertige elektrische Verbindungen resultieren.

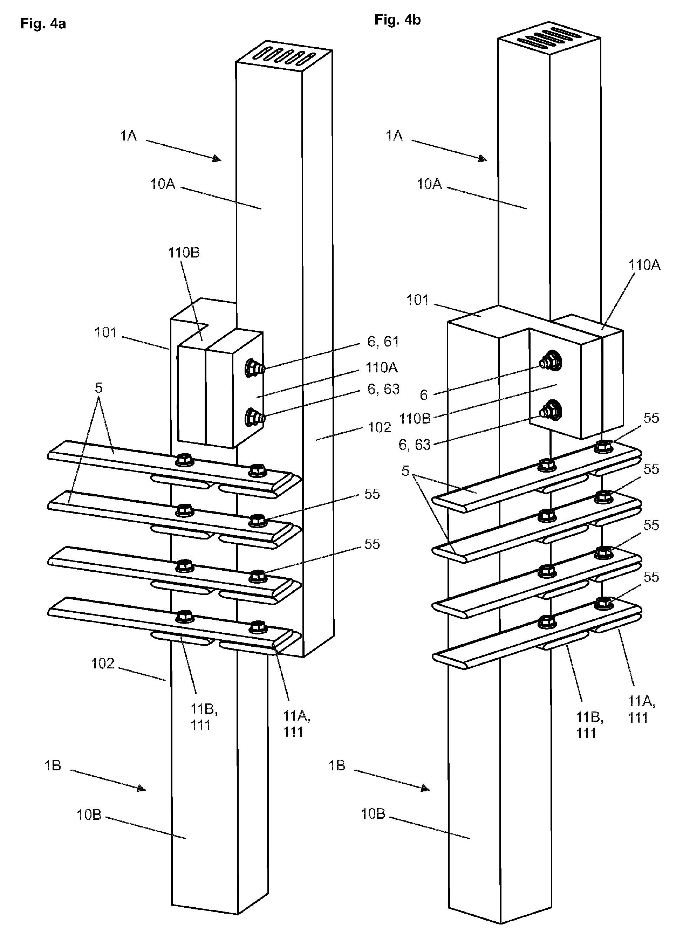

Fig. 4a zeigt zwei miteinander verbundene erfindungsgemässe Stromschienen 1A, 1B in einer weiteren vorzugsweisen Ausgestaltung. Die Stromschienen 1A, 1B sind asymmetrisch ausgestaltet und weisen je nur auf einer Seite einen Kopplungsbereich 101 bzw. 102 auf. An diesen Kopplungsbereichen 101, 102 sind stabil ausgeführte Ausformungen 110A, 110B vorgesehen, die es erlauben, die Verbindung zwischen den Stromschienenkörper zu erstellen. Anstelle der Ausformungen 110A, 110B könnten auch schmalere Ankerplatten vorgesehen werden. Die Ausformungen 110A, 110B bilden Flanschelemente, die durch zwei Schraubverbindungen 63 stabil miteinander verbunden sind. Eine Erhöhung der Stabilität kann erzielt werden, indem die Ausformungen 110A, 110B mit zueinander komplementären Formelementen versehen werden. Z.B. weisen die beiden Ausformungen 110A, 110B an den einander zugewandten Seiten Öffnungen und Zapfen oder Rillen und Nuten auf, die ineinander eingreifen und das Verschieben der beiden Stromschienenkörper 10A; 10B verhindern. In diesem Fall können die beiden Flanschelemente bzw. Ausformungen 110A, 110B auch mit nur einer Schraubengarnitur 63 stabil miteinander verbunden werden.

Fig. 4b zeigt die zwei Stromschienen 1A, 1B von Fig. 4a aus einem anderen Blickwinkel.

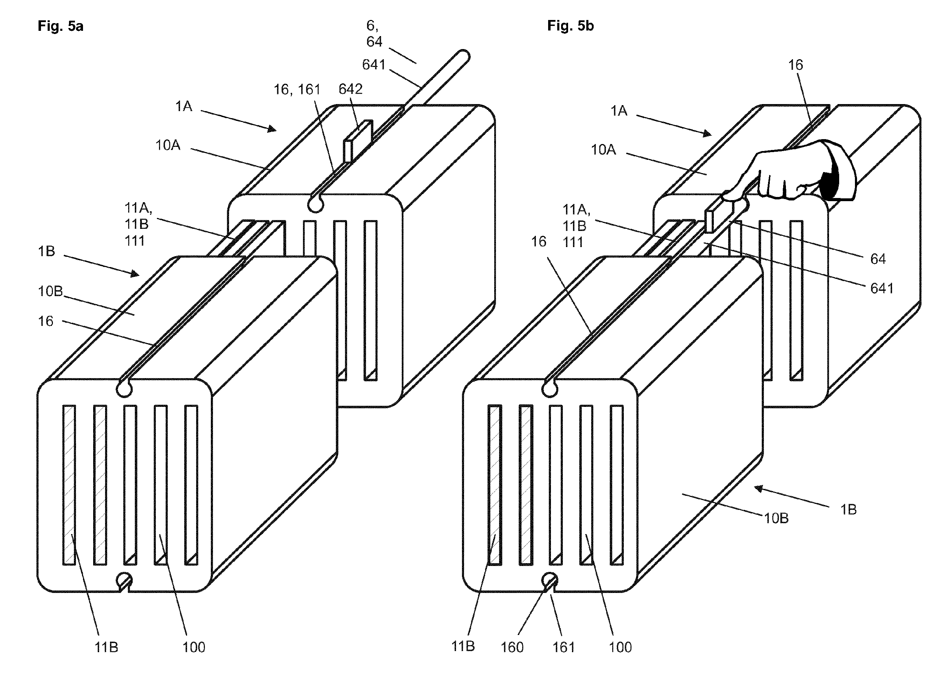

Fig. 5a zeigt zwei gegeneinander verschobene erfindungsgemässe Stromschienen 1A, 1B in einer weiteren vorzugsweisen Ausgestaltung, in der die Leitungsstäbe 11A, 11B und die Anschlusskontakte 111 parallel zur Längsachse der Stromschienen 1A, 1B ausgerichtet sind. Die Anschlusskontakte 111 werden ineinander verschoben und durch eine eingangs genannte Kopplungsvorrichtung miteinander verbunden. Dazu werden korrespondierende Anschlusskontakte 111 der beiden Stromschienen 1A, 1B paarweise gegeneinander geschoben und durch Isolationsplatten von benachbarten Anschlusskontakten 111 getrennt. Durch eine Verbindungsschraube, die isoliert durch Öffnungen in den Anschlusskontakten 111 hindurch geführt wird, werden zwei Klemmplatten miteinander verbunden und gegen die Anschlusskontakte gepresst.

Damit dieser Arbeitsvorgang einfach und präzise durchgeführt werden kann, werden die Stromschienen 1A, 1B zuvor mechanisch miteinander verbunden und parallel entlang einer gemeinsamen Längsachse ausgerichtet. Dazu weist der der Stromschienenkörper 10A, 10B jede Stromschiene 1A, 1B an der Unterseite und der Oberseite je wenigstens einen Lagerkanal 16 auf, in dem ein Verbindungsteil 64 verschiebbar gelagert und in den Lagerkanal 16 der benachbarten Stromschiene 1B; 1A verschiebbar ist. Das Verbindungsteil 64 umfasst einen im Lagerkanal 16 axial verschiebbar gehaltenen Bolzen 641 und ein mit dem Bolzen 641 verbundenes Hebelelement 642, welches durch einen Öffnungsschlitz 161 im Lagerkanal 16 nach aussen ragt. Der Lagerkanal 16 weist daher einen zumindest annähernd Omegaförmigen Querschnitt auf, innerhalb dem der Bolzen 641 sicher gehalten ist. Beispielsweise wird eine Metallhülse mit einem Omega-förmigem Querschnitt in den Stromschienenkörper 10A; 10B eingegossen. Das Verbindungsteil 64 bzw. der Bolzen 641 kann in einfacher Weise manuell betätigt werden, um die mechanische Verbindung zu erstellen und wieder zu lösen. Für das Ausrichten der beiden Stromschienen 1A, 1B kann auch in diesem Fall auf eine Wasserwaage verzichtet werden. Die präzise Ausrichtung der Stromschienen 1A, 1B wird durch den Bolzen 641 angezeigt. Beispielsweise wird die zweite Stromschiene 1B gedreht und verschoben, bis der Bolzen 641 in den Lagerkanal 16 eingeschoben werden kann.

Diese besonders einfach realisierbare Lösung erlaubt somit die rasche und präzise Ausrichtung und Fixierung benachbarter Stromschienen 1A, 1B. Nachdem die Stromschienen 1A, 1B mit der Vorrichtung 9 von Fig. 1 an die Decke angehoben wurden, können diese daher innerhalb von Sekunden ausgerichtet und fixiert werden. Dabei ist es möglich, eines der Verbindungsteile 64 wieder zu lösen, damit nach der Ausrichtung der Stromschienen 1A, 1B die elektrische Verbindung ungehindert erfolgen kann. Vorzugsweise werden die Lagerkanäle 16 jedoch dort vorgesehen, wo die Installation der elektrischen Verbindung nicht behindert wird.

Fig. 5b zeigt die zwei Stromschienen 1A, 1B von Fig. 5a während des Vorgangs der mechanischen Verbindung. Der Verbindungshebel 642 wurde manuell ergriffen und gegen die benachbarte Stromschiene 1B geführt. Der Bolzen 641 wurde in den dortigen Lagerkanal 16B eingeführt, wodurch die mechanische Verbindung erstellt ist und die koaxiale Ausrichtung der Stromschienen 1A, 1B gewährleistet ist. Die Lagerkanäle 16 sind in die Stromschienenkörper 10A, 10B integriert. Auch hier könnten Formteile, die der Lagerung des Verbindungselements 64 dienen, wieder auf der Aussenseite der Stromschienen 1A, 1B vorgesehen werden.

Mittels erfindungsgemässen Stromschienen 1A, 1B lassen sich erfindungsgemässe Stromschienensysteme in hoher Qualität rasch aufbauen. Die Ausgestaltung der Stromschienen 1A, 1B kann in fachmännischer Weise ausgewählt werden. Ferner sind auch anders ausgestaltete Verbindungsmittel in fachmännische Weise einsetzbar. Die Anzahl der eingesetzten Verbindungsmittel und deren Dimensionierung werden in Abhängigkeit der gewünschten Stabilität der mechanischen Verbindungen und insbesondere unter Berücksichtigung des Gewichts der Stromschienen gewählt.

### Literaturverzeichnis

[1] Produktkatalog "Niederspannungs-Schienenverteiler LANZ HE 2.5.2" der LANZ OENSINGEN AG vom Januar 2013
[2] Produktkatalog "MULTIFIX" der LANZ OENSINGEN AG vom August 2001
[3] EP1589627B1
[4] EP1905723B1

## Patentansprüche

1. Stromschiene (1A; 1B) mit einem vergossenen oder gekapselten Stromschienenkörper (10A; 10B), in dem gegeneinander isolierte Leitungsstäbe (11) vorgesehen sind, die an zwei Enden Anschlusskontakte (111) aufweisen, die aus dem Stromschienenkörper (10A; 10B) hervortreten und die durch elektromechanische Verbindungsmittel (5, 55) mit Anschlusskontakten (111) einer benachbarten Stromschiene (1B; 1A) verbindbar sind, **dadurch gekennzeichnet, dass** mit dem Stromschienenkörper (10A; 10B) verbundene oder verbindbare mechanische Verbindungsmittel (6, 16, 61, 62, 63, 64, 105, 106) vorgesehen sind, durch die der Stromschienenkörper (10A; 10B) an wenigstens einem Ende nur mechanisch mit dem Stromschienenkörper (10B; 10A) einer benachbarten Stromschiene (1B; 1A) verbindbar ist, sodass die Stromschiene (1A; 1B) nach der Installation einerseits durch eine mechanische Verbindung und andererseits durch eine elektrische Verbindung, die getrennt voneinander und unabhängig voneinander erstellt werden, mit der benachbarten Stromschiene (1B; 1A) verbunden ist.

2. Stromschiene (1A; 1B) nach Anspruch 1, **dadurch gekennzeichnet, dass** die Anschlusskontakte (111) parallel zur Längsachse der Stromschiene (1A; 1B) ausgerichtet sind und frontseitig oder rückseitig aus dem Stromschienenkörper (10A; 10B) hervortreten oder dass die Anschlusskontakte (111) senkrecht oder schräg zur Längsachse der Stromschiene (1A; 1B) ausgerichtet sind und seitlich aus dem Stromschienenkörper (10A; 10B) hervortreten.

3. Stromschiene (1A; 1B) nach Anspruch 1 oder 2, **dadurch gekennzeichnet, dass** der Stromschienenkörper (10A; 10B) aus einem Isolationsmaterial, wie Giessharz oder Polymerbeton, geformt ist.

4. Stromschiene (1A; 1B) nach Anspruch 1, 2 oder 3, **dadurch gekennzeichnet, dass** mittels der mechanischen Verbindungsmittel (6, 16, 61, 62, 63, 64, 105, 106) eine mechanische Verbindung zwischen dem Stromschienenkörper (10A; 10B) und dem Stromschienenkörper (10B; 10A) der benachbarten Stromschiene (1B; 1A) permanent oder temporär für eine Zeitdauer erstellbar ist, während der die elektrische Verbindung zur benachbarten Stromschiene (1B; 1A) erstellt wird.

5. Stromschiene (1A; 1B) nach einem der Ansprüche 1 - 4, **dadurch gekennzeichnet, dass** der Stromschienenkörper (10A; 10B) wenigstens ein Formteil (105A; 105B) aufweist, durch das eine formschlüssige Verbindung mit dem parallel oder koaxial dazu ausgerichteten Stromschienenkörper (10B; 10A) der benachbarten Stromschiene (1B; 1A) erstellbar ist, der vorzugsweise ein dazu komplementäres Formteil (105) aufweist.

6. Stromschiene (1A; 1B) nach Anspruch 5, **dadurch gekennzeichnet, dass** das Formteil (105) wenigstens eine Einformung oder Ausformung, wie eine Bohrung, ein Nocken oder eine Rippe, umfasst, mittels der der Stromschienenkörper (10A; 10B) gegenüber dem Stromschienenkörper (10B; 10A) der benachbarten Stromschiene (1B; 1A) in einer Richtung oder in einer Ebene fixierbar ist und oder, dass die Formteile (105) ineinander einrastbar können.

7. Stromschiene (1A; 1B) nach einem der Ansprüche 1 - 6, **dadurch gekennzeichnet, dass** die mechanischen Verbindungsmittel (6, 16, 61, 62, 63, 64, 105, 106) wenigstens ein Band (61), wenigstens einen festen oder elastischen Montagebügel oder Montagering (62), oder wenigstens eine Schraubverbindung (63), oder wenigstens ein verschiebbar gelagertes Verbindungsteil (64) umfassen und/oder dass die mechanischen Verbindungsmittel (6, 16, 61, 62, 63, 64, 105, 106) wenigstens ein Rastelemente umfassen.

8. Stromschiene (1A; 1B) nach Anspruch 7, **dadurch gekennzeichnet, dass** der Stromschienenkörper (10A; 10B) und der Stromschienenkörper (10B; 10A) der benachbarten Stromschiene (1B; 1A) mittels des vorzugsweise mit einer Haftschicht versehenen Bands (61) oder dem vorzugsweise spannbaren Ring (62) fest umschliessbar oder umschlossen ist.

9. Stromschiene (1) nach Anspruch 7, **dadurch gekennzeichnet, dass** der Stromschienenkörper (10A; 10B) wenigstens eine Bohrung (106), wie eine Gewindebohrung oder eine Bohrung mit einem Gewindeeinsatz, aufweist, in die eine Verbindungsschraube (631) der Schraubverbindung (63) einführbar ist, die von der benachbarten Stromschiene (1B; 1A) gehalten ist.

10. Stromschiene (1) nach Anspruch 7, **dadurch gekennzeichnet, dass** der Stromschienenkörper (10A; 10B) wenigstens einen Lagerkanal (16) aufweist, in dem das Verbindungsteil (64) verschiebbar gelagert und in eine Öffnung, vorzugsweise in einen Lagerkanal (16) der benachbarten Stromschiene (1B; 1A) verschiebbar ist.

11. Stromschiene (1) nach Anspruch 10, **dadurch gekennzeichnet, dass** das Verbindungsteil (64) einen im Lagerkanal (16) axial verschiebbar gehaltenen Bolzen (641) und vorzugsweise ein mit dem Bolzen (641) verbundenes Hebelelement (642) umfasst, welches durch einen Öffnungsschlitz (161) im Lagerkanal (16) nach aussen ragt.

12. Stromschiene (1A; 1B) nach einem der Ansprüche 1 - 11, **dadurch gekennzeichnet, dass** der Stromschienenkörper (10A; 10B) wenigstens eine Anformung (110A; 110B), wie eine Flanschplatte, aufweist, die dem Halten wenigstens eines der mechanischen Verbindungsmittel (6, 61, 62, 63, 64) dient und/oder die mit wenigstens einer dazu korrespondierenden Anformung (110), die am Stromschienenkörper (10B; 10A) der benachbarten Stromschiene (1B; 1A) vorgesehen ist, verbindbar oder formschlüssig koppelbar ist.

13. Stromschiene (1A; 1B) nach einem der Ansprüche 1 - 12, **dadurch gekennzeichnet, dass** die Stromschiene (1A; 1B) symmetrisch oder asymmetrisch ausgebildet ist und beidseits mit einer gleichartigen Stromschiene (1B; 1A) verbindbar ist.

14. Stromschienen System mit wenigstens einer Stromschiene (1A; 1B) nach einem der Ansprüche 1 - 13.

15. Stromschienensystem nach Anspruch 14, **dadurch gekennzeichnet, dass** symmetrisch oder asymmetrisch ausgebildete Stromschienen (1A; 1B) einerseits je durch elektromechanische Verbindungsmittel (5, 55) und getrennt davon durch mechanische Verbindungsmittel (6, 16, 61, 62, 63, 64, 105, 106) miteinander verbunden sind.
